# EUROPEAN PATENT SPECIFICATION

(11) **EP 3 004 031 B1**
(45) Date of publication and mention of the grant of the patent: **01.01.2020**
(21) Application number: 14734946.8
(22) Date of filing: 28.05.2014
(51) Int. Cl.: C06B 47/00, C06B 47/02, C06D 5/08, F02K 9/42

(54) **DUAL MODE CHEMICAL ROCKET ENGINE, AND DUAL MODE PROPULSION SYSTEM COMPRISING THE ROCKET ENGINE**
CHEMISCHER DUALMODUS-RAKETENMOTOR UND DUALMODUS-ANTRIEBSSYSTEM MIT DEM RAKETENMOTOR
MOTEUR-FUSÉE CHIMIQUE BIMODE, ET SYSTÈME DE PROPULSION BIMODE COMPRENANT LE MOTEUR-FUSÉE

(30) Priority: 29.05.2013 SE 1350653
(43) Date of publication of application: 13.04.2016
(73) Proprietor: ECAPS Aktiebolag, 171 04 Solna (SE)
(72) Inventor: ANFLO, Kjell, S-136 73 Haninge (SE); BERGMAN, Göran, S-155 00 Nykvarn (SE)
(74) Representative: Brann AB
(86) International application number: PCT/SE2014/050656
(87) International publication number: WO 2014/193300

(56) References cited:
- WO-A1-00/50363
- WO-A2-93/03962
- US-A- 3 514 953
- US-A- 4 917 968
- US-A1- 2009 007 541
- US-A1- 2009 266 049
- US-B1- 6 272 846
- US-B1- 6 328 831
- US-B1- 6 984 273

## Description

### Field of the invention

The subject invention relates generally to dual mode bipropellant chemical rocket propulsion systems to be used in aerospace applications for 1) orbit raising, orbit manoeuvres and maintenance, attitude control and deorbiting of spacecraft, and/or 2) propellant settling, attitude and roll control of missiles, launchers and space planes. The present invention also relates to a dual mode chemical rocket engine for use in such systems. The engine uses low-hazardous storable liquid monopropellants compared to the current state of the art and can be operated either in monopropellant mode or in bipropellant mode. The monopropellants used are a low-hazard liquid ADN- or HAN-based fuel-rich monopropellant, and hydrogen peroxide, respectively.

### Background of the invention

Dual mode rocket propulsion systems and dual mode rocket engines (also referred to as thrusters) are known in the art. Currently, many spacecraft use dual-mode propulsion systems, with bipropellant engines for larger thrust operations, and monopropellant engines for smaller thrust or when minimum impulse bit is important. In the art the choice of propellants which are suitable in both bipropellant and monopropellant engines are limited to a few very hazardous propellants. Such bipropellants comprise hydrazine or a derivative thereof, such as mono methyl hydrazine (MMH) and unsymmetrical dimethyl hydrazine (UDMH). An example of a dual mode thruster is a thruster referred to as a Secondary Combustion Augmented Thruster (SCAT). A bipropellant dual mode rocket propulsion system comprising a bipropellant thruster having dual mode capability (i.e. ability to operate either in monopropellant mode or in bipropellant mode) has been described in e.g. US 6,135,393, wherein hydrazine is used as the fuel, and, preferably, nitrogen tetroxide (NTO) as the oxidizer.

The mission requirements for a particular propulsion system requiring high performance are defined by a set of figures of merit. One of the most important figures of merit is specific impulse (*I*_{*s*p}) as it indicates the maximum velocity changes that the spacecraft can achieve, which is the very objective of such propulsion system. Specific impulse is defined as the thrust developed by an engine per unit of propellant mass flow rate. If the thrust is measured in Newton (N) and the flow rate is measured in kilograms (kg) per second (s), then the unit of measurement of specific impulse is Ns/kg. For medium to large spacecraft with requirements of significant velocity changes this is the most important parameter. For small spacecraft where dimensions may be limiting, the density impulse, i.e. Ns per propellant volume, may be the dominant figure of merit. Another figure of merit is the thrust of a rocket engine as it determines how long a maneuver will take and what acceleration it will provide. Yet another parameter is the smallest or minimum impulse bit (Ns) that the engine can generate as it determines how precise a maneuver can be performed.

Both hydrazine (fuel) and nitrogen tetroxide (oxidizer), and their derivatives are extremely hazardous for humans as they are highly toxic, carcinogenic, corrosive, etc., and they are associated with significant concerns regarding the severe impact on the environment that they can cause in the case of spillage and emissions. Therefore the handling thereof and the safety requirements are extremely demanding, time consuming and costly.

The ECHA (European Chemicals Agency) has within REACH (Registration, Evaluation, Authorisation and restriction of Chemicals), which is the European Community Regulation on chemicals and their safe use, identified hydrazine as a substance of very high concern which may lead to that hydrazine may be banned for use in new development. Clean Space, which is an initiative by the European Space Agency (ESA), also calls for substituting conventional hazardous propellants.

There is also a new law, Space Operations Act, in France, with respect to space debris, which requires that the spacecraft shall be deorbited when no longer in use.

US 6,272,846 discloses a satellite propulsion system comprising monopropellant rocket engines and bipropellant rocket engines. The bipropellant rocket engine can be designed to decompose the fuel component in a primary chamber before injecting the resulting gases with the oxidizer in a secondary chamber. Hydrogen peroxide may be used as one component.

US 3,514,953 discloses a trimode rocket engine. Hydrazine and hydrogen peroxide are decomposed on a catalyst bed in separate primary chambers and subsequently combusted in a secondary chamber.

WO 00/50363 discloses a liquid propellant comprising 77.27% of ADN, 9.09% of ammonia and 13.64% of water.

Accordingly, it is therefore desirable to provide a dual mode propulsion system avoiding the use of hydrazine, nitrogen tetroxide, and derivatives thereof. However, so far, no viable rocket propulsion systems, rocket engines, and corresponding alternative propellants with perfor-mance comparable to the prior art hazardous hydrazine propellants have been realized.

### Summary of the invention

The present inventors have found that a propulsion system with comparable performance (i.e. in terms of total impulse for a given system mass) to the prior art dual mode chemical propulsion systems can be achieved by a dual mode chemical rocket engine using storable low-hazardous liquid propellants.

According to the invention a liquid ADN- or HAN-based fuel-rich monopropellant, and hydrogen peroxide, respectively, are used in a dual mode rocket engine comprising primary and secondary reaction chambers.

Accordingly, in one aspect the invention relates to a dual mode chemical rocket engine having a primary reaction chamber for hydrogen peroxide connected to a secondary reaction chamber having means for injection therein of a liquid ADN- or HAN-based fuel-rich monopropellant.

In monopropellant mode operation, the inventive engine uses hydrogen peroxide, which is catalytically decomposed in the primary reactor. Operation and start of the inventive engine in monopropellant mode does not require any pre-heating of the primary reactor, such as by means of an electrical heater.

In bipropellant mode, the catalytic combustion of hydrogen peroxide, taking place in the primary reactor, is used to provide an oxidizer and heat to initiate the thermal decomposition of a liquid ADN or HAN based fuel-rich monopropellant in the secondary reactor, which fuel-rich monopropellant is injected into the secondary reactor. Operation of the inventive engine in bipropellant mode has the advantage of increasing the thrust and specific impulse of the thruster as compared to when operated in monopropellant mode. Operation and start of the inventive engine in bipropellant mode does also not require any electrical preheating of the engine or reactors.

The inventive dual mode chemical rocket engine can thus be made so as to not comprise an electrical heater.

In one embodiment of the inventive engine the means for injection enables injection of the liquid ADN- or HAN-based fuel-rich monopropellant from a propellant feed line from outside into the secondary reaction chamber.

In another aspect the invention relates to a dual mode propulsion system comprising the inventive dual mode chemical rocket engine.

By means of the present invention, a unified propulsion system (UPS) based on "green" alternative monopropellants can be achieved, such as e.g. based on the HPGP® technology, i.e. a system wherein all engines are capable of being operated on one and the same monopropellant. Such a system can include small monopropellant thrusters together with larger dual mode thrusters connected to the same propellant feed system.

The invention uses high performance, low-hazard and environmental benign alternative propellants and has the potential to achieve substantial time and cost savings as compared to the prior art dual mode rocket engines and propulsion systems.

A major advantage of the invention is that existing and well proven catalysts and catalyst beds currently used for the respective monopropellants can also be used with the present invention. The primary catalytic reactor specific to hydrogen peroxide does therefore not require any modification.

In a preferred embodiment of the invention LMP-103S (disclosed e.g. in WO 2012/166046) is used as the fuel-rich monopropellant. Thrusters operated with LMP-103S has during hot firing tests on ground and in-space firings demonstrated an improved specific impulse with >6%, and an improved density impulse with >30%, as compared to hydrazine (monopropellant).

In yet an aspect the present invention relates to a method of generating thrust, wherein a liquid ADN- or HAN-based fuel-rich liquid monopropellant is injected into a flow of hot oxidizer-rich gas obtained from the decomposition of hydrogen peroxide, so that said fuel-rich liquid monopropellant thereby is decomposed and combusted along with the oxidizer-rich gas.

The invention provides an enabling technology for substituting the conventional dual mode and bipropellant rocket propulsion systems using highly hazardous storable liquid propellants with a significantly reduced hazard and environmentally benign alternative propellants system with comparable performance, and which also will significantly reduce and facilitate propellant handling and fuelling operations.

Further advantages and embodiments will be apparent from the following detailed description and appended claims.

In the present invention the term "monopropellant" has been used to denote both monopropellants which are composed of more than one chemical compound, such as LMP-103S, which thus could be regarded a monopropellant blend, and also to denote single compound monopropellants, such as H₂O₂ (which in practice however typically will be aqueous, and thus will also include some water).

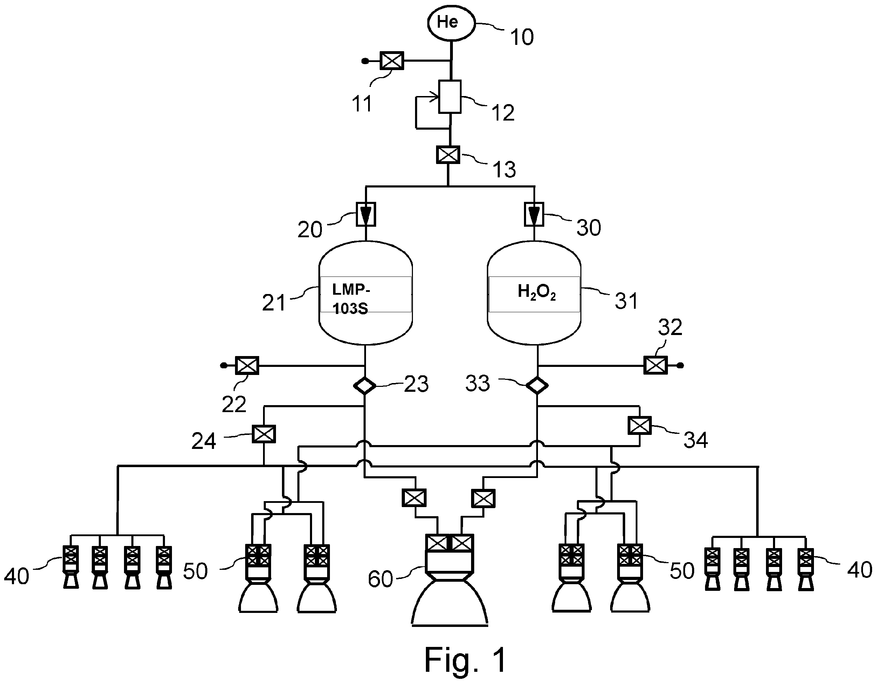

The term "propulsion system" is used herein to denote the hydraulic architecture of the hardware and its components for the purpose of generating propulsive thrust of a spacecraft, launcher attitude control system etc., comprising propellant tank(s), pressurant tank(s), propellant and pressurant loading service valves, propellant and pressurant lines, isolation valve(s), propellant system filter(s), pressure transducer(s), thrusters/rocket engines and other mission specific fluid components required. Such system is schematically illustrated in **FIG. 1****.**

### Brief description of the attached drawings

FIGURE 1 is a simplified hydraulic schematic representation of an embodiment of the inventive dual mode propulsion system.
FIGURE 2 shows an embodiment **100** of the inventive dual mode chemical rocket engine comprising a primary reaction chamber **140**, a secondary reaction chamber **150**, injection means **125** for injection of a liquid ADN- or HAN-based fuel-rich monopropellant, and a high temperature resistant catalytic device **135**.

### Detailed description of the invention and preferred embodiments thereof

According to the invention liquid storable low-hazard liquid monopropellants are used. The monopropellants used in the engine of the invention are a liquid ADN- or HAN-based fuel-rich monopropellant, and hydrogen peroxide, respectively.

The inventive engine constitutes new propulsion technology enabling the use of low-hazard propellants in dual mode or bipropellant operation.

A significant achievement in the art is the feasibility to substitute hydrazine as a monopropellant for many space applications. This has been successfully demonstrated using the HPGP® technology comprising the LMP-103S monopropellant blend (described in e.g. WO 2012/166046) and corresponding thrusters (disclosed in e.g. WO 02/095207) ranging from typically 0.5 N to 200 N. A 1 N HPGP® propulsion system has been operational for several years in an earth orbit in space on the main PRISMA satellite.

The inventive engine comprises a primary hydrogen peroxide reaction chamber **140** for the decomposition of hydrogen peroxide comprising a catalyst bed for the decomposition of hydrogen peroxide, which primary reaction chamber is connected to, and opens into, a secondary reaction chamber **150** having means **125** for injection therein of a liquid ADN- or HAN-based fuel-rich monopropellant.

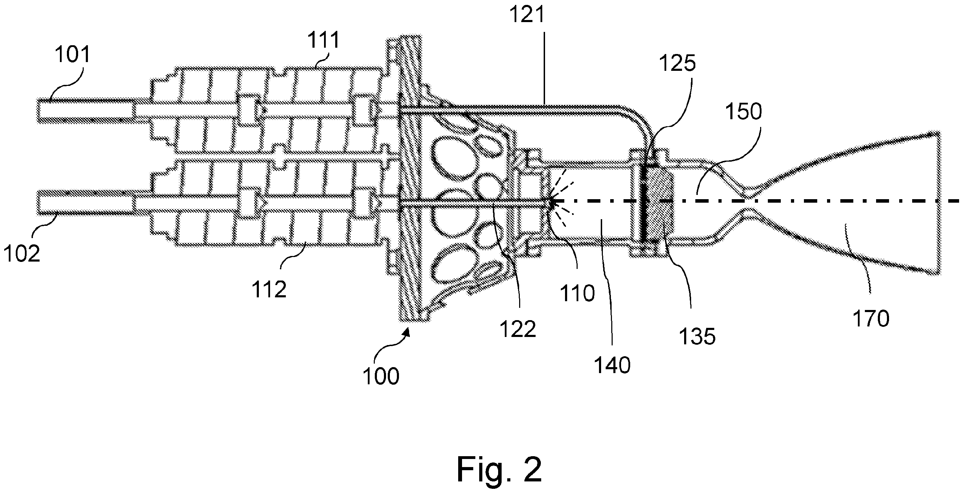

Bipropellant mode operation of the inventive engine can use homogeneous gas phase combustion in the secondary reaction chamber. Alternatively, combustion could be promoted by catalysis using a high temperature resistant catalytic device. In such embodiment the inventive engine additionally comprises a high temperature resistant catalytic device **135**, e.g. as shown in **FIG 2**.

In one embodiment of the inventive dual mode chemical engine the liquid ADN- or HAN-based fuel-rich monopropellant is injected from outside into the secondary reaction chamber of the engine. An example of such embodiment is depicted in **FIG 2**.

The catalyst in the primary reaction chamber **140** would be the life limiting element of the thruster when exposed to the reactive decomposition and combustion species and operated at higher temperatures than their current design limits. A major benefit of the invention is that the temperature in the secondary reaction chamber **150** can be significantly increased, while the temperature of the catalyst in the primary reactor can be kept essentially unaffected. Accordingly, existing and well proven catalysts and catalyst beds currently used for hydrogen peroxide can also be used with the present invention. The primary reactor specific to hydrogen peroxide, does therefore not require any modification.

The primary reaction chamber **140** preferably uses conventional technology for the decomposition of hydrogen peroxide.

While liquid ADN- or HAN-based fuel-rich monopropellant blends could be based on HAN for the purpose of the present invention, it is generally preferred that said fuel-rich monopropellant blends be based on ADN, unless indicated otherwise.

Preferably, a liquid, aqueous ADN based monopropellant is used as the fuel-rich monopropellant. Such monopropellants have been generally disclosed in WO 00/50363 and WO 2002/096832. Examples of specific compositions are e.g. LMP-101, LMP-103, LMP-103S, and FLP-106, especially LMP-103S which has been described in WO 2012/166046.

According to calculations performed with NASA-Glenn Chemical Equilibrium Program CEA2, operation of the inventive rocket engine in bipropellant mode using the environmentally benign monopropellant LMP-103S would result in an additional improvement of the specific impulse of up to 20% over LMP-103S when used as a monopropellant only, which is comparable with the specific impulse of the prior art bipropellant engines operated on the highly hazardous conventional storable propellants, i.e. MMH and NTO. Furthermore, the density impulse of the LMP-103S and H₂O₂ monopropellant combination will exceed the density impulse of the prior art bipropellant engine operated on conventional storable propellants with up to 5%.

Hydrogen peroxide is probably the most studied monopropellant worldwide. However, the specific impulse of hydrogen peroxide as a monopropellant is relatively low and depending on the concentration it is in the range of 1,600-1,800 Ns/kg. The relatively low specific impulse and concerns about hydrogen peroxide's storability has displaced it from the spacecraft reaction control system (RCS) in favour of hydrazine. Hydrogen peroxide can also be used as an oxidizer in bi-propellant mode and it has been studied for propulsion purposes at least since 1934. Hydrogen peroxide is reactive and decomposes slowly over time when stored even in its most stabilized form. The concerns for the storability and the safe use of hydrogen peroxide have been debated over the years. It is reported that these concerns might be exaggerated and that hydrogen peroxide can be handled safely. However, the toxicological and carcinogenic concerns of the current state-of-the-art propellants have led to renewed interest in hydrogen peroxide during the last 10 years.

The H₂O₂ monopropellant is preferably of a concentration of at least 80%, and more preferably at least 90%. Conventional grades and concentrations of the H₂O₂ monopropellant for rocket propulsion can thus be used in the present invention.

With reference to **FIG. 2**, a preferred embodiment of the inventive rocket engine **100** will now be described in more detail. In such embodiment the rocket engine comprises an inlet port **102** for the hydrogen peroxide followed by a series redundant flow control valve 112 and propellant feed tube **122**, and an inlet port **101** for liquid ADN- or HAN-based fuel-rich monopropellant followed by a series redundant flow control valve **111** and propellant feed tube **121** leading into secondary reaction chamber **150**.

The engine **100** and operation thereof will now be described in more detail. In bipropellant mode hydrogen peroxide is injected via injector **110** into the primary reaction chamber **140**, where the monopropellant is catalytically decomposed causing an exothermal reaction which produces heat (up to 900°C for 90% H₂O₂) and oxidizer-rich water vapour which flows into the secondary reaction chamber **150**. A liquid ADN- or HAN-based fuel-rich monopropellant, such as LMP-103S, is injected via injector **125** into the secondary reaction chamber **150**, where said fuel-rich monopropellant is atomized, and is mixed and combusted with the oxygen from the primary reactor in homogeneous gas phase. Thereby, the stagnation gas temperature is further significantly increased (up to 2,300°C) which enhances the performance of the engine in terms of fuel efficiency, i.e. specific impulse, before the exhaust gases are accelerated through the nozzle **170** thus generating thrust.

The inventive rocket engine **100** can also operate in monopropellant mode for lower thrust and impulse bit by injection of only the hydrogen peroxide, e.g. highly concentrated (≥ 90%) hydrogen peroxide, which is injected into the primary reaction chamber **140** where the monopropellant is catalytically decomposed causing an exothermal reaction which produces heat and gas which flows to the secondary reaction chamber **150**, before the exhaust gases are accelerated through the nozzle **170** thus generating thrust.

The primary and secondary reaction chambers **140** and **150**, respectively, are arranged in series to each other, e.g. as shown in **Fig. 2**.

Fuel-rich liquid HAN-based monopropellant blends could be used in the same way as LMP-103S.

The secondary combustion chamber **150** of the inventive engine is preferable fabricated from rhenium lined with iridium to withstand the very high combustion temperatures.

### The inventive propulsion system

A simplified hydraulic schematic view of an embodiment of the inventive dual mode propulsion system is shown in in **FIG 1**. Service valves **22** and **32** are used to load the monopropellants into propulsion system prior to operation. The liquid ADN- or HAN-based fuel-rich monopropellant, e.g. LMP-103S, is contained in the propellant tank **21**, and the hydrogen peroxide is stored in the propellant tank **31**. A high pressure (i.e. of several hundred bars) pressurizing gas, e.g. helium, is filled into the pressurant tank **10** via service valve **11** prior to operation of the propulsion system. The propulsion system is commissioned by venting the blanking gas in the propellant lines downstream of the isolation valves **24** and **34**, thereafter performing priming of propellant to the thrusters prior to first firing. When firing any thruster the pressurant gas from the tank **10** is regulated down to the rocket engines operating propellant feed pressure (i.e. tens of bars) by a pressure regulator **12**. The pressurant flows through the pressurant isolation valve **13** and further through the one-way valves **20** and **30** to the propellant tanks **21** and **31**. Depending on the operational modes, i.e. mono- or bipropellant mode, the monopropellant from either of propellant tanks **21** or **31**, or both, flow through the respective propellant filters 23 and 33 to the subject engine(s) when firing.

The bipropellant Liquid Apogee Engine (LAE) **60** has an assessed thrust level between 50 N and 10 kN. In an inventive propulsion system, a bipropellant liquid apogee engine **60**, when present, is preferably a dual mode engine of the invention.

The divert dual mode thrusters **50** have an assessed thrust level between 5 N and 5kN. In an inventive propulsion system, a divert dual mode thruster **50**, when present, is preferably a dual mode engine of the invention, such as the engine **100**.

Any monopropellant rocket engines in the inventive dual mode propulsion system use a liquid, fuel-rich monopropellant, based on ADN or HAN.

The RCS thrusters **40** are preferable ECAPS 1 N to 22 N HPGP monopropellant thrusters operated on LMP-103S.

In a dual mode propulsion system of the invention, the inventive engine concept is preferably applied to engines which are used early in the mission.

Pre-heating of the primary reactor is neither required in monopropellant mode, nor in bipropellant mode operation of the inventive engine. No elecrical pre-heating of either of the reactors is required for the operation of the inventive engine in bipropellant mode. This will greatly reduce the requirements of any heating system included in an inventive propulsion system, and the heating power required by the propulsion system.

The inventive engine accordingly allows for a simplified engine design to be used, without any heater.

## Claims

1. A dual mode chemical rocket engine (100) having a primary reaction chamber (140) for hydrogen peroxide comprising a catalyst bed for hydrogen peroxide, which primary reaction chamber is connected to a secondary reaction chamber (150) having means for injection (125) therein of a fuel-rich monopropellant, **characterized in that** the fuel-rich monopropellant is a liquid ADN based, or HAN based monopropellant.

2. The dual mode chemical rocket engine of claim 1, wherein the means for injection (125) is configured to enable injection of the fuel-rich monopropellant from a propellant feed line (121) from outside into the secondary reaction chamber (150).

3. The dual mode chemical rocket engine of 1 or 2, additionally comprising in the secondary reaction chamber (150) a high temperature resistant catalytic device (135).

4. The dual mode chemical rocket engine of any one of the preceding claims, wherein the secondary reaction chamber (150) is fabricated from rhenium, preferably rhenium lined with iridium.

5. A dual mode propulsion system comprising the dual mode chemical rocket engine (100) of any one of the preceding claims.

6. The dual mode propulsion system of claim 5, comprising a liquid fuel-rich monopropellant based on ADN or HAN, and hydrogen peroxide.

7. The dual mode propulsion system of claim 5 or 6, comprising monopropellant rocket engines (40) using the fuel-rich monopropellant mentioned in claim 6.

8. A spacecraft comprising the dual mode chemical rocket engine of any one of claims 1-4, and/or the dual mode propulsion system of any one of claims 5-7.

9. Use of a bipropellant combination consisting of a fuel-rich ADN, or HAN based liquid monopropellant blend, stored in a first separate tank, and hydrogen peroxide of a concentration of ≥90%, stored in a second separate tank, in the dual mode chemical rocket engine of any one of claims 1-4.

10. A method of generating thrust, wherein a fuel-rich liquid monopropellant is injected into a flow of hot oxidizer-rich gas obtained from the decomposition of hydrogen peroxide, so that the fuel-rich liquid monopropellant thereby is decomposed and combusted along with the oxidizer-rich gas, **characterized in that** the fuel-rich liquid monopropellant is ADN, or HAN based.

11. The method of claim 10, wherein the thrust is generated in an engine of claim 1.

## Patentansprüche

1. Chemisches Dual-Mode-Raketentriebwerk (100) mit einem Primärreaktionsraum (140) für Wasserstoffperoxid, der ein Katalysatorbett für Wasserstoffperoxid aufweist, wobei der Primärreaktionsraum mit einem Sekundärreaktionsraum (150) verbunden ist, welcher in sich eine Einspritzeinrichtung (125) eines brennstoffreichen Monotreibmittels aufweist, **dadurch gekennzeichnet, dass** das brennstoffreiche Monotreibmittel ein flüssiges Monotreibmittel auf ADN- oder HAN-Basis ist.

2. Chemisches Dual-Mode-Raketentriebwerk nach Anspruch 1, wobei die Einspritzeinrichtung (125) dazu ausgebildet ist, das Einspritzen des brennstoffreichen Monotreibmittels aus einer Treibmittelzuleitung (121) von außen in den Sekundärreaktionsraum (150) zu ermöglichen.

3. Chemisches Dual-Mode-Raketentriebwerk nach Anspruch 1 oder 2, das im Sekundärreaktionsraum (150) zusätzlich eine hochtemperaturbeständige Katalysatorvorrichtung (135) aufweist.

4. Chemisches Dual-Mode-Raketentriebwerk nach einem der vorstehenden Ansprüche, wobei der Sekundärreaktionsraum (150) aus Rhenium, bevorzugt aus mit Iridium ausgekleidetem Rhenium, hergestellt ist.

5. Dual-Mode-Antriebssystem, das das chemische Dual-Mode-Raketentriebwerk (100) nach einem der vorstehenden Ansprüche aufweist.

6. Dual-Mode-Antriebssystem nach Anspruch 5, das ein flüssiges brennstoffreiches Monotreibmittel auf ADN- oder HAN-Basis und Wasserstoffperoxid aufweist.

7. Dual-Mode-Antriebssystem nach Anspruch 5 oder 6, das Monotreibmittel-Raketentriebwerke (40) aufweist, die das in Anspruch 6 genannte brennstoffreiche Monotreibmittel verwenden.

8. Raumfahrzeug, das das chemische Dual-Mode-Raketentriebwerk nach einem der Ansprüche 1-4 und/oder das Dual-Mode-Antriebssystem nach einem der Ansprüche 5-7 aufweist.

9. Verwendung einer Kombination aus zwei Treibmitteln, die aus einem Gemisch aus flüssigem brennstoffreichem Monotreibmittel auf ADN- oder HAN-Basis, das in einem ersten separaten Tank aufbewahrt ist, und Wasserstoffperoxid mit einer Konzentration von mindestens 90 %, das in einem zweiten separaten Tank aufbewahrt ist, besteht, in dem chemischen Dual-Mode-Raketentriebwerk nach einem der Ansprüche 1-4.

10. Verfahren zum Erzeugen von Schub, wobei ein brennstoffreiches flüssiges Monotreibmittel in einen Strom von heißem oxidatorreichen Gas, das aus dem Abbau von Wasserstoffperoxid erhalten wurde, eingespritzt wird, wodurch das brennstoffreiche flüssige Monotreibmittel gemeinsam mit dem oxidatorreichen Gas abgebaut und verbrannt wird, **dadurch gekennzeichnet, dass** das brennstoffreiche flüssige Monotreibmittel auf ADN oder HAN basiert.

11. Verfahren nach Anspruch 10, wobei der Schub in einem Triebwerk nach Anspruch 1 erzeugt wird.

## Revendications

1. Moteur-fusée chimique double mode (100) ayant une chambre de réaction primaire (140) pour peroxyde d'hydrogène comprenant un lit de catalyseur pour peroxyde d'hydrogène, laquelle chambre de réaction primaire est raccordée à une chambre de réaction secondaire (150) ayant un moyen pour y injecter (125) un mono-ergol riche en combustible, **caractérisé en ce que** le mono-ergol riche en combustible est un mono-ergol liquide à base d'ADN, ou à de HAN.

2. Moteur-fusée chimique double mode selon la revendication 1, dans lequel le moyen d'injection (125) est configuré pour permettre une injection du mono-ergol riche en combustible à partir d'une ligne d'alimentation en ergol (121) depuis l'extérieur dans la chambre de réaction secondaire (150).

3. Moteur-fusée chimique double mode selon la revendication 1 ou 2, comprenant de surcroît dans la chambre de réaction secondaire (150), un dispositif catalytique résistant à haute température (135).

4. Moteur-fusée chimique double mode selon l'une quelconque des revendications précédentes, dans lequel la chambre de réaction secondaire (150) est fabriquée à partir de rhénium, de préférence de rhénium chemisé avec de l'iridium.

5. Système de propulsion double mode comprenant un moteur-fusée chimique double mode (100) de l'une quelconque des revendications précédentes.

6. Système de propulsion double mode selon la revendication 5, comprenant un mono-ergol liquide riche en combustible à base d'ADN ou de HAN, et du peroxyde d'hydrogène.

7. Système de propulsion double mode selon la revendication 5 ou 6, comprenant des moteurs-fusées à mono-ergol (40) utilisant le mono-ergol riche en combustible mentionné dans la revendication 6.

8. Engin spatial comprenant le moteur-fusée chimique double mode de l'une quelconque des revendications 1 à 4, et/ou le système de propulsion double mode de l'une quelconque des revendications 5 à 7.

9. Utilisation d'une combinaison bi-ergol consistant en un mélange de mono-ergol liquide riche en combustible à base d'ADN ou de HAN, stocké dans un premier réservoir séparé, et de peroxyde d'hydrogène d'une concentration ≥ 90 %, stocké dans un second réservoir séparé, dans le moteur-fusée chimique double mode de l'une quelconque des revendications 1 à 4.

10. Procédé de génération de poussée, dans lequel un mono-ergol liquide riche en combustible est injecté dans un flux d'un gaz chaud riche en oxydant obtenu à partir de la décomposition de peroxyde d'hydrogène, de sorte que le mono-ergol liquide riche en combustible est ainsi décomposé et brûlé conjointement avec le gaz riche en oxydant, **caractérisé en ce que** le mono-ergol liquide riche en combustible est à base d'ADN, ou de HAN.

11. Procédé selon la revendication 10, dans lequel la poussée est générée dans un moteur de la revendication 1.
